# EUROPEAN PATENT SPECIFICATION

(11) **EP 4 394 640 B1**
(45) Date of publication and mention of the grant of the patent: **16.07.2025**
(21) Application number: 22885653.0
(22) Date of filing: 11.10.2022
(51) Int. Cl.: G06F 30/17, G01D 21/02, G06F 119/14, G06F 119/08, B66C 15/00, G01S 17/88, G01S 7/52, G01S 7/539, G01S 15/88, G01S 17/42

(54) **DATA PROCESSING METHOD AND APPARATUS FOR ADDITION OF LOAD APPLYING BODY, AND ELECTRONIC DEVICE**
DATENVERARBEITUNGSVERFAHREN UND -VORRICHTUNG ZUR HINZUFÜGUNG EINES LASTANWENDUNGSKÖRPERS UND ELEKTRONISCHE VORRICHTUNG
PROCÉDÉ ET APPAREIL DE TRAITEMENT DE DONNÉES DESTINÉS À L'AJOUT D'UN CORPS D'APPLICATION DE CHARGE, ET DISPOSITIF ÉLECTRONIQUE

(30) Priority: 26.10.2021 CN 202111244532
(43) Date of publication of application: 03.07.2024
(73) Proprietor: Shandong Shenli Rigging Co., Ltd, Jining Economic Development Zone, 272415 (CN)
(72) Inventor: DU, Daping, Shandong 2722415 (CN); ZHANG, Tixue, Shandong 2722415 (CN); QIU, Hengchen, Shandong 2722415 (CN); CUI, Yingying, Shandong 2722415 (CN); LI, Xun, Shandong 2722415 (CN); GAO, Yan, Shandong 2722415 (CN); FENG, Chao, Shandong 2722415 (CN)
(74) Representative: Porta & Consulenti Associati S.p.A.
(86) International application number: PCT/CN2022/124560
(87) International publication number: WO 2023/071774

(56) References cited:
- WO-A1-2015/171409
- CN-A- 102 607 447
- CN-A- 106 679 579
- CN-A- 108 182 325
- CN-A- 111 174 721
- CN-A- 111 811 420
- CN-A- 113 688 484
- US-A1- 2020 184 121
- US-A1- 2020 380 087
- HASHEMI SEYED MOHAMMAD ET AL: "Automated Mathematical-Based Design Framework for The Selection of Rigging Configuration", PROCEEDINGS OF THE 36TH INTERNATIONAL SYMPOSIUM ON AUTOMATION AND ROBOTICS IN CONSTRUCTION (ISARC), 24 May 2019 (2019-05-24), XP093225266, Retrieved from the Internet <URL:https://www.iaarc.org/publications/fulltext/ISARC_2019_Paper_43.pdf> [retrieved on 20241118], DOI: 10.22260/ISARC2019/0024
- OLEARCZYK J ET AL: "Intelligent Crane Management Algorithm for Construction Operation (iCrane)", 31 December 2015 (2015-12-31), XP093225269, Retrieved from the Internet <URL:https://www.iaarc.org/publications/fulltext/FFACE-ISARC15-2992533.pdf> [retrieved on 20241118]
- SIU MING-FUNG FRANCIS ET AL: "Combining photogrammetry and robotic total stations to obtain dimensional measurements of temporary facilities in construction field", VISUALIZATION IN ENGINEERING, vol. 1, no. 1, 1 December 2013 (2013-12-01), XP093225271, ISSN: 2213-7459, Retrieved from the Internet <URL:https://viejournal.springeropen.com/articles/10.1186/2213-7459-1-4> [retrieved on 20241118], DOI: 10.1186/2213-7459-1-4
- BAI PENGJUN ET AL: "Research on monitoring tower crane subtle deformation characteristics based on LiDAR data", PROCEEDINGS OF THE SPIE, SPIE, US, vol. 11849, 6 June 2021 (2021-06-06), pages 1184918 - 1184918, XP060143708, ISSN: 0277-786X, ISBN: 978-1-5106-5738-0, [retrieved on 20241118], DOI: 10.1117/12.2599117

## Description

This patent application claims the benefit and priority of Chinese Patent Application No. 202111244532.6 filed with the China National Intellectual Property Administration on October 26, 2021 and entitled "DATA PROCESSING METHOD AND APPARATUS FOR ADDITION OF LOAD APPLYING BODY, AND ELECTRONIC DEVICE".

### TECHNICAL FIELD

The present invention relates to a technical field of rigging application, and in particular to a data processing method and apparatus for the addition of a load applying body, and an electronic device.

### BACKGROUND

At present, a rigging carrying an object has non-linear stress-strain and presents a large deformation, and a contact area between the deformed rigging and the connected object is changed to some extent, so it is improper to simply apply a load or constraint to a surface area or node inside the rigging when the load or constraint is applied, and it is better to add a load applying body during a modeling process.

However, the rigging cannot bear the stress caused by the existing addition manner for adding the load applying body to the rigging, and it is easy to generate an abnormal deformation of the rigging.

Hashemi Seyed Mohammad ET AL: "Automated Mathematical-Based Design Framework for The Selection of Rigging Configuration", Proceedings of the 36th International Symposium on Automation and Robotics in Construction (ISARC), 24 May 2019, https:// www.iaarc.org/publications/fulltext/ISARC_2019_Paper_43.pdf, discloses an automated mathematical-based design framework for the selection of rigging configuration.

Olearczyk J ET AL: "Intelligent Crane Management Algorithm for Construction Operation (iCrane)", 31 December 2015, https:// www.iaarc.org/publications/fulltext/FFACE-ISARC15-2992533.pdf, discloses a methodology that combines crane selection, optimum lift sequencing, and project global and individual lift visualizations in a single-sequenced algorithm.

### SUMMARY

Aiming at disadvantages in the conventional art, a data processing method and apparatus for the addition of a load applying body, and an electronic device are provided by the present invention, to alleviate a technical problem of an abnormal deformation of a rigging due to the rigging being unable to bear stress caused by an existing addition of the load applying body to the rigging

To achieve the above technical objective, the present invention provides the following solution.

In a first aspect, an embodiment of the present invention provides a data processing method for addition of a load applying body, applied to a computer device. The computer device is connected with a three-dimensional laser scanning device. The method includes:
acquiring first rigging model data to which a load applying body has been added; wherein the first rigging model data is model data generated by adding the load applying body using three-dimensional modeling software;
controlling a three-dimensional laser scanning device to aim at predefined mark points arranged on a surface of a rigging model entity, and to move along with the predefined mark points; wherein the rigging model entity is a model entity corresponding to the first rigging model data;
acquiring movement data of the three-dimensional laser scanning device moving along with the predefined mark points, and determining, according to the movement data, deformation data generated by the rigging model entity when bearing stress;
analyzing, according to the deformation data, arrangement accuracy of the load applying body which has been added to the first rigging model data; and
adjusting an arrangement position of the added load applying body, based on the arrangement accuracy and data of the load applying body, to obtain the adjusted second rigging model data.

In an embodiment, the method further includes:
while laser rays emitted by the three-dimensional laser scanning device aim at and move along the predefined mark points, controlling the three-dimensional laser scanning device to detect temperature of the model entity at the predefined mark points, to obtain temperature change data of the rigging model entity.

In an embodiment, the computer device is further connected with an ultrasonic device. Material of the rigging model entity is metal material. The device further includes:
when the temperature change data exceeds a predefined temperature change threshold, controlling the ultrasonic device to carry out ultrasonic flaw detection on the rigging model entity to obtain an ultrasonic flaw detection result; and
analyzing stress data of the first rigging model data based on the ultrasonic flaw detection result, the temperature change data and the deformation data corresponding to the predefined mark points.

In an embodiment, the method further includes:
acquiring a designated rigging operating environment data; and
predicting cooling modes for the first rigging model data according to the designated rigging operating environment data and the temperature change data.

In an embodiment, the cooling modes include a first cooling mode in a first process in which a rigging in the first rigging model data drives the load applying body to move upwards, and a second cooling mode in a second process in which the rigging and the load applying body are not moving.
predicting the cooling modes for the first rigging model data according to the designated rigging operating environment data and the temperature change data, includes:
predicting the first cooling mode for the first rigging model data in the first process according to the designated rigging operating environment data, the temperature change data, weight data of the load applying body and a movement speed of the rigging in the first process; and
predicting the second cooling mode for the first rigging model data in the second process according to the designated rigging operating environment data, the temperature change data and the weight data of the load applying body;
wherein, a standard temperature threshold in the first cooling mode is greater than a standard temperature threshold in the second cooling mode.

In an embodiment, the method further includes:
analyzing stress data of the first rigging model data based on the temperature change data and the deformation data corresponding to the predefined mark points.

In an embodiment, adjusting the arrangement position of the added load applying body, based on the arrangement accuracy and data of the load applying body, to obtain the adjusted second rigging model data includes:
adjusting the arrangement position of the added load applying body, based on the arrangement accuracy, the data of the load applying body and the stress data, to obtain the adjusted second rigging model data.

In a second aspect, a data processing apparatus for addition of a load applying body, applied to a computer device is provided. The computer device is connected with a three-dimensional laser scanning device. The apparatus includes:
an acquiring module, configured to acquire first rigging model data to which a load applying body has been added; wherein the first rigging model data is model data generated by adding the load applying body using three-dimensional modeling software;
a control module, configured to control a three-dimensional laser scanning device to aim at predefined mark points arranged on a surface of a rigging model entity, and to move along with the predefined mark points; wherein the rigging model entity is a model entity corresponding to the first rigging model data;
a determining module, configured to acquire movement data of the three-dimensional laser scanning device moving along with the predefined mark points, and determine, according to the movement data, deformation data generated by the rigging model entity when bearing stress;
an analysis module, configured to analyze, according to the deformation data, arrangement accuracy of the load applying body which has been added to the first rigging model data; and
an adjusting module, configured to adjust an arrangement position of the added load applying body, based on the arrangement accuracy and data of the load applying body, to obtain the adjusted second rigging model data.

In a third aspect, an embodiment of the present invention also provides an electronic device. The electronic device includes a memory and a processor. A computer program which is run on processor is stored in the memory. The computer program when executed by the processor causes the processor to carry out the method in the first aspect.

The embodiment of the present invention has the following beneficial effects.

The embodiment of the present invention provides the data processing method and apparatus for the addition of the load applying body, and the electronic device. The method includes: acquiring first rigging model data to which a load applying body has been added; wherein the first rigging model data is model data generated by adding the load applying body using three-dimensional modeling software; controlling a three-dimensional laser scanning device to aim at predefined mark points arranged on a surface of a rigging model entity, and to move along with the predefined mark points; wherein the rigging model entity is a model entity corresponding to the first rigging model data; acquiring movement data of the three-dimensional laser scanning device moving along with the predefined mark points, and determining, according to the movement data, deformation data generated by the rigging model entity when bearing stress; analyzing, according to the deformation data, arrangement accuracy of the load applying body which has been added to the first rigging model data; and adjusting an arrangement position of the added load applying body, based on the arrangement accuracy and data of the load applying body, to obtain the adjusted second rigging model data. In the solution, the three-dimensional laser scanning device aims at the predefined mark points arranged on the surface of the rigging model entity, and moves along with the predefined mark points, to determine the actual deformation situation caused by the rigging model entity bearing the stress according to the movement data, and further, analyze the accuracy of the adding arrangement, such that the adding arrangement of the load applying body may be adjusted more accurately, and the position of the added load applying body is more accurate and more suitable for the stress of the rigging, thereby avoiding the abnormal deformation of the rigging caused by unbearable stress, that is, avoiding the deformation of the rigging due to improper arrangement of the added load applying body, and alleviating the technical problem of the abnormal deformation of the rigging due to the rigging being unable to bear stress caused by the existing addition of the load applying body to the rigging.

In order that the above objects, features and advantages of the present invention will be more obviously understood, the following detailed description is set forth with particularity to the preferred embodiments of the present invention in conjunction with the accompanying drawings.

### BRIEF DESCRIPTION OF THE DRAWINGS

In order to illustrate the embodiments of the present invention or the technical solutions of the conventional art more clearly, the accompanying drawings used in the embodiments will be briefly described below. Apparently, the accompanying drawing described below show merely some embodiments of the present invention. For those of ordinary skill in the art, other drawings can be obtained according to the accompanying drawings without creative efforts.
FIG. 1 is a flow diagram of a data processing method for addition of a load applying body according to an embodiment of the present invention.
FIG. 2A and FIG. 2B are modeling examples of adding a cylinder simulation chain as a load applying body in the data processing method for the addition of the load applying body according to an embodiment of the present invention.
FIG. 3A and FIG. 3B are modeling examples of adding a chain as a load applying body in the data processing method for the addition of the load applying body according to an embodiment of the present invention.
FIG. 4 is a structural schematic diagram of a data processing apparatus for the addition of the load applying body according to an embodiment of the present invention.
FIG. 5 is a structural schematic diagram of an electronic device according to an embodiment of the present invention.

### DETAILED DESCRIPTION OF THE EMBODIMENTS

The technical solutions in the embodiments of the present invention will be clearly and completely described below in conjunction with the accompanying drawings in the embodiments of the present invention. Apparently, the described embodiments are merely a part of the embodiments of the present invention, rather than all of the embodiments.

The embodiments of the present invention are further described below in conjunction with the accompanying drawings.

In addition, the terms "including", "having", or any other variants thereof mentioned in the embodiments of the present invention, are intended to cover a non-exclusive inclusion. For example, a process, a method, a system, a product, or a device that includes a series of steps or units is not limited to the listed steps or units, rather than optionally further includes an unlisted step or unit, or optionally further includes another inherent step or unit of the process, method, product, or device.

At present, a rigging is abnormally deformed due to the rigging being unable to bear stress caused by an existing addition of the load applying body to the rigging.

Based on this, the embodiments of the present invention provide a data processing method and apparatus for the addition of the load applying body, and an electronic device. The method may alleviate the technical problem of the abnormal deformation of the rigging due to the rigging being unable to bear stress caused by the existing addition of the load applying body to the rigging.

The embodiments of the present invention are further described below in conjunction with the accompanying drawings.

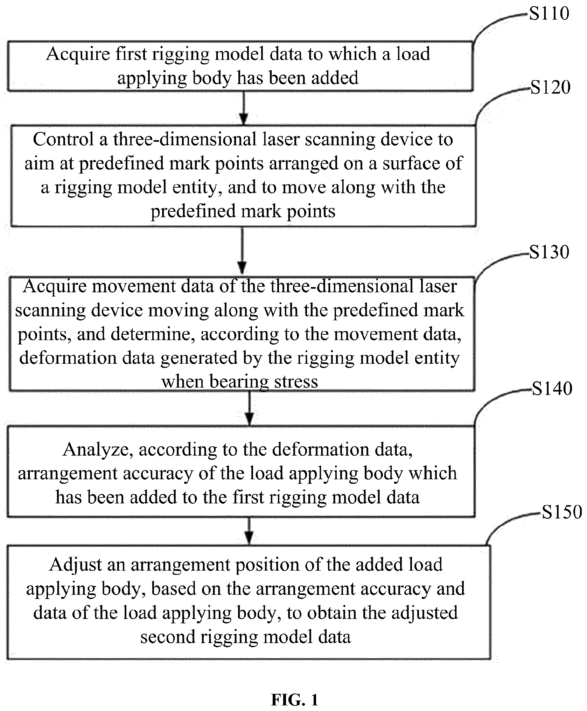

FIG. 1 is a flow diagram of the data processing method for the addition of the load applying body according to an embodiment of the present invention. Wherein, the method is applied to a computer device. The computer device is connected with a three-dimensional laser scanning device. As shown in FIG. 1, the method includes steps S110 - S150.

In step S110, first rigging model data to which a load applying body has been added is acquired.

It should be noted that the rigging carrying an object has non-linear stress-strain, and thus has a large deformation, and the contact area between the deformed rigging and the connected object is changed to some extent, so it is improper to simply apply a load or constraint to a surface area or node inside the rigging when the load or constraint is applied. Therefore, it is better to add the load applying body during a modeling process.

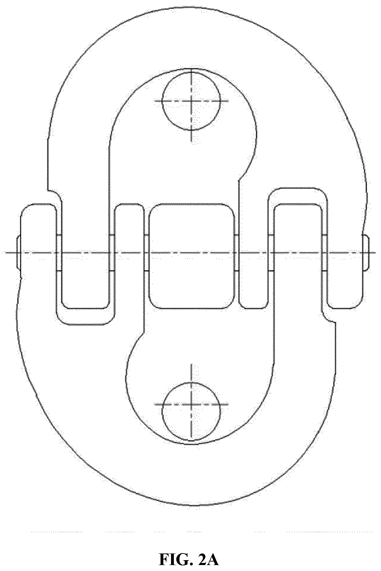

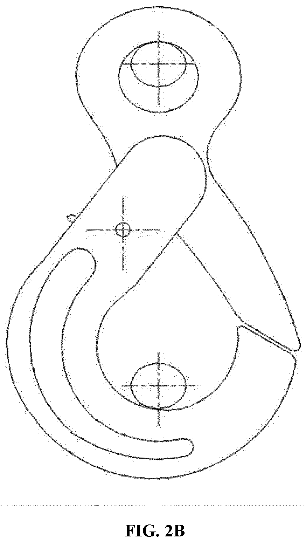

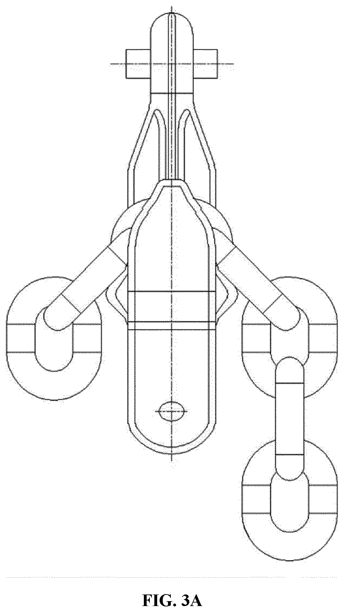

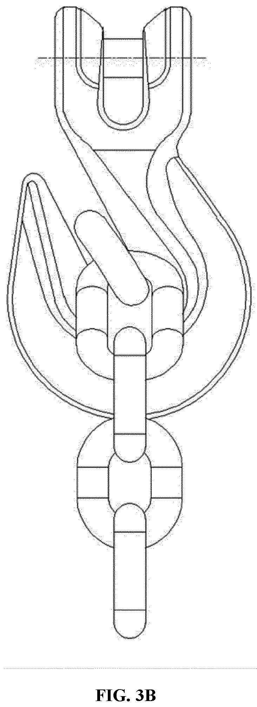

In a specific implementation, various ways of adding the load applying body may be divided into two categories, one is to add a cylinder simulation chain as the load applying body, modeling (first rigging model data) of which is as shown in FIG. 2A and FIG. 2B, and the other is to add a chain as the load applying body, the modeling (first rigging model data) of which is as shown in FIG. 3A and FIG. 3B.

In step S120, a three-dimensional laser scanning device is controlled to aim at predefined mark points arranged on a surface of a rigging model entity, and to move along with the predefined mark points.

Wherein, the rigging model entity is a model entity corresponding to the first rigging model data.

For a selection rule of the predefined mark points arranged on the surface of the rigging model entity, the predefined mark points may be arranged by selecting easily deformed areas on the rigging model due to downward tension. For example, the predefined mark points may be selected in positions such as the lower area of the rigging model, the area near the load applying body on the rigging model, and the area with less stress tolerance on the rigging model.

In the step, laser rays emitted by the three-dimensional laser scanning device are controlled by the computer device to aim at the predefined mark points arranged on the surface of the rigging model entity, and to move along with the predefined mark points.

In step S130, movement data of the three-dimensional laser scanning device moving along with the predefined mark points is acquired, and according to the movement data, deformation data generated by the rigging model entity bearing stress is determined.

In the step, the computer device acquires the movement data of the three-dimensional laser scanning device moving along with the predefined mark points from the three-dimensional laser scanning device, and then determines, according to the movement data, the deformation data generated by the rigging model entity bearing stress.

It should be noted that the predefined mark points are fixed on the surface of the rigging model entity. If the rigging model entity is deformed, the positions of the predefined mark points can be changed, and the laser rays emitted by the three-dimensional laser scanning device is moved along with the predefined mark points, such that the data moving along with the predefined mark points may accurately reflect the actual deformation data of the rigging model entity.

In step S140, according to the deformation data, arrangement accuracy of the load applying body which has been added to the first rigging model data is analyzed.

The deformation data may reflect whether the arrangement of the added load applying body is reasonable. For example, if the deformation data is large, it indicates that the arrangement position of the added load applying body is unreasonable; and if the deformation data is small or even no deformation occurs, it indicates that the arrangement position of the added load applying body is reasonable.

For example, the arrangement accuracy of the load applying body is determined according to the size of the deformation data. The greater the deformation data, the lower the accuracy. The smaller the deformation data, the higher the accuracy. For example, when the deformation data is greater than the first predefined deformation degree, it is determined that the arrangement of the load applying body is unreasonable. For example, when the deformation data is smaller than the second predefined deformation degree, it is determined that the arrangement of the load applying body is reasonable.

In step S150, based on the arrangement accuracy and data of the load applying body, the arrangement position of the added load applying body is adjusted to obtain the adjusted second rigging model data.

In a specific implementation, the higher the arrangement accuracy, the smaller adjustment displacement for adjusting the arrangement position of the added load applying body. The data such as the weight data and weight distribution of the load applying body may determine the direction of the adjustment displacement mode for adjusting the arrangement position of the added load applying body. For example, when the weight data of the load applying body is large and the weight distribution of the load applying body is inclined to a certain side area on the load applying body, the arrangement position of the load applying body on the rigging model may be adjusted. The certain side area on the load applying body may be evenly distributed relative to the left and right sides of the rigging model by means of rotation, pushing and the like. That is, the relative position between the certain side area on the load applying body and the rigging model is arranged in the center, thereby preventing the side area from being inclined to a certain side relative to the rigging model, such that the downward pulling force of the load applying body on the rigging model may be more uniform in the contact part, thereby preventing the pressure intensity of the load applying body on the rigging model from being increased when the load applying body is inclined.

In the embodiment of the present invention, the three-dimensional laser scanning device aims at the predefined mark points arranged on the surface of the rigging model entity, and moves along with the predefined mark points, to determine the actual deformation situation caused by the rigging model entity bearing the stress according to the movement data, and further analyze the accuracy of the adding arrangement, such that the adding arrangement of the load applying body may be adjusted more accurately, and the position of the added load applying body is more accurate and more suitable for the stress of the rigging, thereby avoiding the abnormal deformation of the rigging caused by unbearable stress, that is, avoiding the deformation of the rigging due to improper arrangement of the added load applying body, and alleviating the technical problem of the abnormal deformation of the rigging due to the rigging being unable to bear stress caused by an existing addition of the load applying body to the rigging.

The following provides details for the steps.

In some embodiments, the method may further include step a).

In step a), while laser rays emitted by the three-dimensional laser scanning device aim at and move along with the predefined mark points, the three-dimensional laser scanning device is controlled to detect temperature of the model entity at the predefined mark points, to obtain temperature change data of the rigging model entity.

The temperature of the model entity at the predefined mark points may be detected by the three-dimensional laser scanning device to obtain the temperature change data of the rigging model entity, such that the rigging temperature change situation of the rigging model entity due to the stress of the load applying body may be obtained more comprehensively and accurately.

In some embodiments, the computer device is further connected with an ultrasonic device. Material of the rigging model entity is metal material. The method may further include steps b) and c).

In step b), when the temperature change data exceeds a predefined temperature change threshold, the ultrasonic device is controlled to carry out ultrasonic flaw detection on the rigging model entity, to obtain an ultrasonic flaw detection result.

In step c), based on the ultrasonic flaw detection result, the temperature change data and the deformation data corresponding to the predefined mark points, the stress data of the first rigging model data is analyzed.

In a specific implementation, the temperature of the rigging model entity may rise due to the large stress of the load applying body, easily resulting in deformation and internal damage of the rigging model entity. If the rigging model entity is internally damaged, the temperature may rise sharply. The greater the temperature change when the temperature rises sharply, the more serious the internal damage of the rigging model entity.

In the embodiment of the present invention, a critical value of temperature change when the rigging model entity is internally damaged may be selected as the predefined temperature change threshold. It should be noted that the small temperature rise change of the rigging model entity is caused possibly only due to the stress, while the large temperature rise change is likely caused by internal damage of the rigging model entity. The critical value of temperature rise change corresponding to the critical damage inside the rigging model entity may be selected as the predefined temperature change threshold in the embodiment.

It should be noted that the rigging model entity is likely to be internally damaged due to the stress of the load applying body, while the internal damage may not be exposed, thus the internal damage of the rigging model entity may not be found from the surface.

According to the embodiment of the present invention, even if the internal damage of the rigging model entity cannot be found from the surface, the internal damage of the rigging model entity may be detected through the ultrasonic flaw detection of the ultrasonic device, achieving an accurate detection for the internal damage of the rigging that cannot be found. Based on the more comprehensive data such as the ultrasonic flaw detection result, the temperature change data and the deformation data, the analyzed stress data of the first rigging model data may be more accurate.

In some embodiments, the method may further include steps d) and e).

In step d), a designated rigging operating environment data is acquired.

In step e), according to the designated rigging operating environment data and the temperature change data, cooling modes for the first rigging model data are predicted.

Through the rigging operating environment data and the temperature change data, the cooling modes of the rigging model may be predicted more comprehensively based on the more comprehensive temperature data, such that the predicted cooling modes of the rigging model are more accurate and comprehensive.

In some embodiments, the cooling modes include a first cooling mode in a first process in which the rigging in the first rigging model data drives the load applying body to move upwards, and a second cooling mode in a second process in which the rigging and the load applying body are not moving. The step e) may specifically include steps f) and g).

In step f), according to the designated rigging operating environment data, the temperature change data, the weight data of the load applying body and a movement speed of the rigging in the first process, the first cooling mode for the first rigging model data in the first process is predicted.

In step g), according to the designated rigging operating environment data, the temperature change data and the weight data of the load applying body, the second cooling mode for the first rigging model data in the second process is predicted.

Wherein, a standard temperature threshold in the first cooling mode is greater than a standard temperature threshold in the second cooling mode.

It should be noted that the standard of stress borne by the rigging model in the process of lifting and driving the load applying body to rise is different from the standard of stress borne by the rigging model in the static process of lifting the load applying body.

In the process of lifting and driving the load applying body to rise by the rigging model, higher toughness of the rigging model is needed rather than rigidity. The higher the temperature of the rigging model, the higher the toughness of the rigging model and the weaker the rigidity of the rigging model, thus the standard temperature threshold in the first cooling mode in the process of lifting and driving the load applying body to rise by the rigging model is larger, and then the toughness rather than rigidity of the rigging model is improved, so that the rigging model successfully lifts and drives the load applying body to rise, and at the same time, unnecessary fracture of the rigging model in this process is avoided.

In the static process of lifting the load applying body by the rigging model, the rigidity of the rigging model is more needed than the toughness. The lower the temperature of the rigging model, the higher the rigidity of the rigging model and the weaker the toughness of the rigging model, thus the standard temperature threshold in the second cooling mode in the static process of lifting load applying body by the rigging model is smaller, and then the rigidity rather than toughness of the rigging model is improved, such that the load applying body successfully lifted by the rigging model is in a static state, and at the same, unnecessary deformation of the rigging model is avoided.

In some embodiments, the method may further include step h).

In step h), based on the temperature change data and the deformation data corresponding to the predefined mark points, the stress data of the first rigging model data is analyzed.

In a specific implementation, the temperature of the rigging model entity may rise due to the large stress of the load applying body, easily resulting in deformation. It should be noted that the greater the stress data of the first rigging model data, the greater the corresponding temperature change data and deformation data. Therefore, in the embodiment of the present invention, the stress data of the first rigging model data may be analyzed according to the temperature change data and the deformation data. For example, when the temperature change data is greater than a certain predefined change threshold and the deformation data is greater than a certain predefined deformation threshold, it is determined that the stress data of the first rigging model data is greater than a certain value. For another example, when the temperature change data is less than a certain predefined change threshold and the deformation data is less than a certain predefined deformation threshold, it is determined that the stress data of the first rigging model data is less than a certain value.

Based on the more comprehensive data such as the temperature change data and deformation data of the rigging model entity, the analyzed stress data of the first rigging model data may be more accurate.

In some embodiments, the step S150 may specifically include step i).

In step i), based on the arrangement accuracy, the data of the load applying body and stress data, the arrangement position of the added load applying body is adjusted, to obtain the adjusted second rigging model data.

According to the data of the load applying body, the analyzed arrangement accuracy of the added load applying body and the analyzed stress data of the rigging model, the first rigging model data may be adjusted more comprehensively and accurately, such that the adjusted second rigging model data is more comprehensive and accurate, the adjusted arrangement of the added load applying body is more reasonable and suitable for the rigging model, and the fracture of the rigging due to improper arrangement of the added load applying body is avoided.

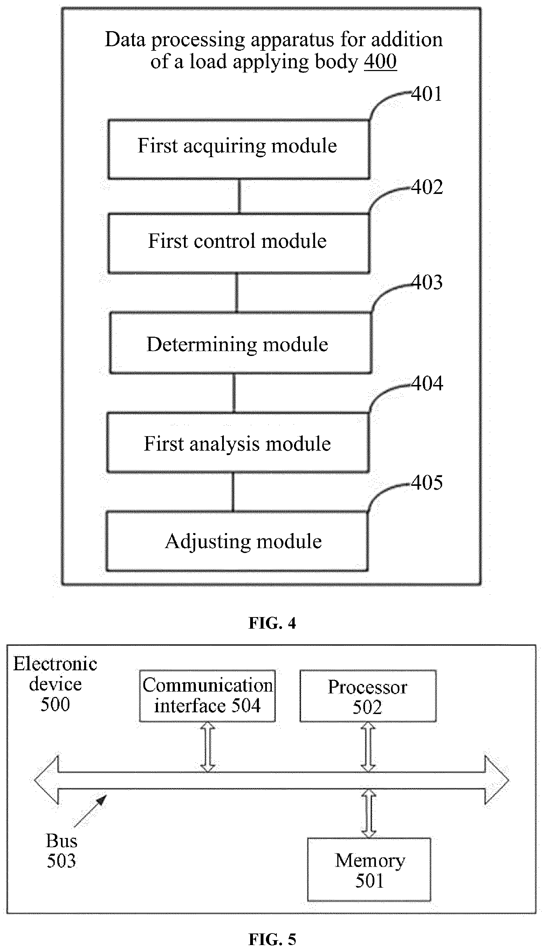

FIG. 4 is a structural schematic diagram of a data processing apparatus for the addition of the load applying body. The apparatus may be applied to a computer device. The computer device is connected with a three-dimensional laser scanning device. As shown in FIG. 4, the data processing apparatus 400 for the addition of the load applying body includes a first acquiring module 401, a first control module 402, a determining module 403, a first analysis module 404 and an adjusting module 405.

The first acquiring module 401 is configured to acquire first rigging model data to which a load applying body has been added; wherein the first rigging model data is model data generated by adding the load applying body using three-dimensional modeling software.

The first control module 402 is configured to control a three-dimensional laser scanning device to aim at predefined mark points arranged on a surface of a rigging model entity, and to move along with the predefined mark points; wherein the rigging model entity is a model entity corresponding to the first rigging model data.

The determining module 403 is configured to acquire movement data of the three-dimensional laser scanning device moving along with the predefined mark points, and determine, according to the movement data, deformation data generated by the rigging model entity bearing stress.

The first analysis module 404 is configured to analyze, according to the deformation data, arrangement accuracy of the load applying body which has been added to the first rigging model data.

The adjusting module 405 is configured to adjust an arrangement position of the added load applying body, based on the arrangement accuracy and data of the load applying body, to obtain the adjusted second rigging model data.

In some specific embodiments, the apparatus further includes a second control module.

While laser rays emitted by the three-dimensional laser scanning device aim at and move along with the predefined mark points, the second control module is configured to control the three-dimensional laser scanning device to detect temperature of the model entity at the predefined mark points, to obtain temperature change data of the rigging model entity.

In some embodiments, the computer device is further connected with an ultrasonic device. Material of the rigging model entity is metal material. The apparatus is further configured to:
when the temperature change data exceeds a predefined temperature change threshold, control the ultrasonic device to carry out ultrasonic flaw detection on the rigging model entity to obtain an ultrasonic flaw detection result; and
based on the ultrasonic flaw detection result, the temperature change data and the deformation data corresponding to the predefined mark points, analyze stress data of the first rigging model data.

In some specific embodiments, the apparatus further includes a second acquiring module and a prediction module.

The second acquiring module is configured to acquire a designated rigging operating environment data.

The prediction module is configured to predict cooling modes for the first rigging model data according to the designated rigging operating environment data and the temperature change data.

In some embodiments, the cooling modes include a first cooling mode in a first process in which the rigging in the first rigging model data drives the load applying body to move upwards, and a second cooling mode in a second process in which the rigging and the load applying body are not moving.

The prediction module is specifically configured to:
according to the designated rigging operating environment data, the temperature change data, weight data of the load applying body and a movement speed of the rigging in the first process, predict the first cooling mode for the first rigging model data in the first process; and
according to the designated rigging operating environment data, the temperature change data and the weight data of the load applying body, predict the second cooling mode for the first rigging model data in the second process.

Wherein, a standard temperature threshold in the first cooling mode is greater than a standard temperature threshold in the second cooling mode.

In some embodiments, the apparatus further includes a second analysis module.

The second analysis module is configured to analyze stress data of the first rigging model data based on the temperature change data and the deformation data corresponding to the predefined mark points.

In some embodiments, the adjusting module 405 is specifically configured to:
based on the arrangement accuracy, the data of the load applying body and the stress data, adjust the arrangement position of the added load applying body, to obtain the adjusted second rigging model data.

The data processing apparatus for the addition of the load applying body provided by the embodiment of the present invention has the same technical characteristics as the data processing method for the addition of the load applying body, so the same technical problems may also be solved, and the same technical effect may be achieved.

The embodiment of the present invention provides an electronic device. As shown in FIG. 5, the electronic device 500 includes a processor 502 and a memory 501. A computer program which may be run on the processor is stored in the memory. The computer program when executed by the processor causes the processor to carry out the steps of the method provided by the above embodiments.

Referring to FIG. 5, the electronic device further includes a bus 503 and a communication interface 504. The processor 502, the communication interface 504 and the memory 501 are connected via the bus 503. The processor 502 is configured to execute executable modules, such as the computer program, stored in the memory 501.

The memory 501 may include an RAM (Random Access Memory) and/or a non-volatile memory, such as at least one disk memory. The wired or wireless communication connection between a network element of the system and at least one other network element is realized through at least one communication interface 504, and the Internet, wide area network, local network, metropolitan area network and the like may be used.

The bus 503 may be an ISA (Industry Standard Architecture) bus, a PCI (Peripheral Component Interconnect) bus, or an EISA (Extended Industry Standard Architecture) bus. The bus may be classified into an address bus, a data bus, a control bus, and the like. For convenience, only one double-sided arrow is used for representation in FIG. 5, but this does not mean that there is only one bus or only one type of bus.

The memory 501 is configured to store a program. The processor 502 executes the program after receiving an execution instruction. The method executed by the apparatus according to any one embodiment of the present invention may be applied to the processor 502 or implemented by the processor 502.

The processor 502 may be an integrated circuit chip and has a signal processing capability. In an implementation process, steps in the method may be implemented by using a hardware integrated logical circuit in the processor 502, or by using instructions in a form of software. The processor 502 may be a general-purpose processor including a central processing unit (CPU), a network processor (NP), ect., a digital signal processor (DSP), an application specific integrated circuit (ASIC), a field-programmable gate array (FPGA) or other programmable logic devices, discrete gate or transistor logic devices, discrete hardware components or the like. The methods, the steps, and logical block diagrams that are disclosed in the embodiments of the present invention may be implemented or performed. The general-purpose processor may be a microprocessor, or the processor may be any conventional processor or the like. The steps of the methods disclosed in the embodiments of the present invention may be directly performed by a hardware decoding processor, or may be performed by using a combination of hardware and software modules in the decoding processor. A software module may be located in a mature memory medium in the art, such as a random access memory, a flash memory, a read-only memory, a programmable read-only memory, an electrically erasable programmable memory, a register. The memory medium is located in the memory 501, and the processor 502 reads information in the memory 501 and completes the steps of the methods in combination with hardware of the processor.

Corresponding to the data processing method for the addition of the load applying body, the embodiment of the present invention also provides a computer readable memory medium. Computer executable instructions are stored in the computer readable memory medium. The computer executable instructions when called and executed by the processor cause the processor to carry out the steps of the data processing method for the addition of the load applying body.

The data processing apparatus for the addition of the load applying body provided in the embodiment of the present invention may be specific hardware on a device or software or firmware mounted on the device, etc. The implementation principle and technical effect of the apparatus provided in the embodiment of the present invention are the same as those of the method in the embodiment. For brief description, matters not mentioned in the apparatus of the embodiment may refer to corresponding contents in the method of the embodiment. It may be clearly understood by those skilled in the art that, for the purpose of convenient and brief description, in a detailed working process of the system, apparatus and unit, with reference to a corresponding process in the method of the embodiment, details are not described again here.

In the embodiments provided in the present invention, it should be understood that the disclosed apparatus and method may be implemented in other manners. The described apparatus in the embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the devices or units may be implemented in electronic, mechanical, or other forms.

Then, for example, the flowchart and block diagrams in the accompanying drawings illustrate an architecture, functionality and operation of possible implementations of the apparatus, method and computer program products according to various embodiments of the present invention. In this regard, each block in the flowcharts or block diagrams may represent a module, a segment, or a portion of code, including one or more executable instructions for implementing the specified logical function(s). It should also be noted that, in some alternative implementations, the functions noted in the block may occur out of the order noted in the accompanying drawings. For example, two blocks in succession actually may be executed substantially concurrently, or may sometimes be executed in the reverse order, depending upon the functionality involved. It can also be noted that each block of the block diagrams and/or flowchart diagrams and combinations of blocks in the block diagrams and/or flowchart diagrams can be implemented by special hardware-based systems which perform the specified functions or combination of special hardware and computer instructions.

The units described as separate parts may or may not be physically separate, and parts displayed as units may or may not be physical units, may be located in one position, or may be distributed on a plurality of network elements. Some or all of the units may be selected based on actual requirements to achieve the objectives of the solutions of the embodiments.

In addition, functional units in the embodiments provided by present invention may be integrated into one processing unit, or each of the units may exist alone physically, or two or more units may be integrated into one unit.

When the functions are implemented in a form of a software functional unit and sold or used as an independent product, the functions may be stored in a computer readable memory medium. Based on such understanding, the technical solutions of the present invention essentially, or the part contributing to the prior art, or some of the technical solutions may be implemented in a form of a software product. The computer software product is stored in a memory medium, and includes several instructions for instructing a computer device (which may be a personal computer, a server, a network device, or the like) to perform all or some of the steps of the methods in the embodiments of the present invention. The memory medium includes various media, such as a USB flash drive, a mobile hard disk, a read-only memory (ROM), a random access memory (RAM), a magnetic disk, or an optical disc, that may store program codes.

It is noted that similar labels and alphabets represent similar elements in figures, and thus, once an element is defined in one drawing, the element does not need to be further defined and described in other figures. In addition, the terms "first", "second", "third", ect. are only used to distinguish descriptions and cannot be understood as indicating or implying relative importance.

Finally, it should be noted that the foregoing embodiments are merely specific embodiments of the present invention, and are intended for describing the technical solutions of the present invention rather than for limiting the present invention, and the scope of protection of the present invention is not limited thereto.

Therefore, the protection scope of the present invention shall be subject to the protection scope of the claims.

In this specification, several specific examples are used for illustration of the principles and implementations of the present invention. The descriptions of the foregoing embodiments are used to help understanding the method of the present invention and core ideas thereof.

Therefore, the content of this specification shall not be construed as a limitation to the present invention.

The embodiments of the present invention are described above with reference to the accompanying drawings, but the present invention is not limited to the foregoing embodiments. The foregoing embodiments are only illustrative rather than restrictive.

## Claims

1. A data processing method for addition of a load applying body, wherein the method is applied to a computer device, the computer device is connected with a three-dimensional laser scanning device, and the method comprises:
acquiring (S110) first rigging model data to which a load applying body has been added;
wherein the first rigging model data is model data generated by adding the load applying body using three-dimensional modeling software;
controlling (S120) a three-dimensional laser scanning device to aim at predefined mark points arranged on a surface of a rigging model entity, and to move along with the predefined mark points; wherein the rigging model entity is a model entity corresponding to the first rigging model data;
acquiring (S130) movement data of the three-dimensional laser scanning device moving along with the predefined mark points, and determining, according to the movement data, deformation data generated by the rigging model entity when bearing stress;
analysing (S140), according to the deformation data, arrangement accuracy of the load applying body which has been added to the first rigging model data; and
adjusting (S150) an arrangement position of the added load applying body, based on the arrangement accuracy and data of the load applying body, to obtain the adjusted second rigging model data.

2. The method according to claim 1, further comprising:
while laser rays emitted by the three-dimensional laser scanning device aim at and move along the predefined mark points, controlling the three-dimensional laser scanning device to detect temperature of the model entity at the predefined mark points, to obtain temperature change data of the rigging model entity.

3. The method according to claim 2, wherein the computer device is further connected with an ultrasonic device, material of the rigging model entity is metal material, and the method further comprises:
when the temperature change data exceeds a predefined temperature change threshold, controlling the ultrasonic device to carry out ultrasonic flaw detection on the rigging model entity to obtain an ultrasonic flaw detection result; and
analyzing stress data of the first rigging model data based on the ultrasonic flaw detection result, the temperature change data and the deformation data corresponding to the predefined mark points.

4. The method according to claim 2, further comprising:
acquiring a designated rigging operating environment data ; and
predicting cooling modes for the first rigging model data according to the designated rigging operating environment data and the temperature change data.

5. The method according to claim 4, wherein the cooling modes comprise a first cooling mode in a first process in which a rigging in the first rigging model data drives the load applying body to move upwards, and a second cooling mode in a second process in which the rigging and the load applying body are not moving;
predicting the cooling modes for the first rigging model data according to the designated rigging operating environment data and the temperature change data, comprises:
predicting the first cooling mode for the first rigging model data in the first process according to the designated rigging operating environment data, the temperature change data, weight data of the load applying body and a movement speed of the rigging in the first process; and
predicting the second cooling mode for the first rigging model data in the second process according to the designated rigging operating environment data, the temperature change data and the weight data of the load applying body;
wherein, a standard temperature threshold in the first cooling mode is greater than a standard temperature threshold in the second cooling mode.

6. The method according to claim 2, further comprising:
analyzing stress data of the first rigging model data based on the temperature change data and the deformation data corresponding to the predefined mark points.

7. The method according to claim 3 or 6, wherein adjusting the arrangement position of the added load applying body, based on the arrangement accuracy and data of the load applying body, to obtain the adjusted second rigging model data comprises:
adjusting the arrangement position of the added load applying body, based on the arrangement accuracy, the data of the load applying body and the stress data, to obtain the adjusted second rigging model data.

8. A data processing apparatus (400) for addition of a load applying body, wherein the apparatus is applied to a computer device, the computer device is connected with a three-dimensional laser scanning device, and the apparatus comprises:
an acquiring module (401), configured to acquire first rigging model data to which a load applying body has been added; wherein the first rigging model data is model data generated by adding the load applying body using three-dimensional modeling software;
a control module (402), configured to control a three-dimensional laser scanning device to aim at predefined mark points arranged on a surface of a rigging model entity, and to move along with the predefined mark points; wherein the rigging model entity is a model entity corresponding to the first rigging model data;
a determining module (403), configured to acquire movement data of the three-dimensional laser scanning device moving along with the predefined mark points, and determine, according to the movement data, deformation data generated by the rigging model entity when bearing stress;
an analysis module (404), configured to analyze, according to the deformation data, arrangement accuracy of the load applying body which has been added to the first rigging model data; and
an adjusting module (405), configured to adjust an arrangement position of the added load applying body, based on the arrangement accuracy and data of the load applying body, to obtain the adjusted second rigging model data.

9. A computer program comprising instructions to cause the data processing apparatus of claim 8 to execute the steps of the data processing method of any one of claims 1 to 7.

## Patentansprüche

1. Datenverarbeitungsverfahren zur Hinzufügung eines Lastanwendungskörpers, wobei das Verfahren auf eine Computereinrichtung angewendet wird, die Computereinrichtung mit einer dreidimensionalen Laserabtasteinrichtung verbunden ist und das Verfahren umfasst:
Erfassen (S110) erster Rigging-Modelldaten, zu denen ein Lastanwendungskörper hinzugefügt wurde;
wobei die ersten Rigging-Modelldaten Modelldaten sind, die durch Hinzufügen des Lastanwendungskörpers unter Verwendung einer dreidimensionalen Modellierungssoftware erzeugt werden;
Steuern (S120) einer dreidimensionalen Laserabtasteinrichtung, um auf vordefinierte Markierungspunkte zu zielen, die auf einer Oberfläche einer Rigging-Modellentität angeordnet sind, und um sich zusammen mit den vordefinierten Markierungspunkten zu bewegen; wobei die Rigging-Modellentität eine Modellentität ist, die den ersten Rigging-Modelldaten entspricht;
Erfassen (S130) von Bewegungsdaten der dreidimensionalen Laserabtasteinrichtung, die sich zusammen mit den vordefinierten Markierungspunkten bewegt, und Bestimmen, gemäß den Bewegungsdaten, von Verformungsdaten, die von der Rigging-Modellentität unter Belastung erzeugt werden;
Analysieren (S140) der Anordnungsgenauigkeit des Lastanwendungskörpers, der den ersten Rigging-Modelldaten hinzugefügt wurde, gemäß den Verformungsdaten; und
Einstellen (S150) einer Anordnungsposition des hinzugefügten Lastanwendungskörpers auf Grundlage der Anordnungsgenauigkeit und Daten des Lastanwendungskörpers, um die eingestellten zweiten Rigging-Modelldaten zu erhalten.

2. Verfahren nach Anspruch 1, ferner umfassend:
während Laserstrahlen, die von der dreidimensionalen Laserabtasteinrichtung emittiert werden, auf die vordefinierten Markierungspunkte zielen und sich entlang dieser bewegen, Steuern der dreidimensionalen Laserabtasteinrichtung, um die Temperatur der Modellentität an den vordefinierten Markierungspunkten zu detektieren, um Temperaturänderungsdaten der Rigging-Modellentität zu erhalten.

3. Verfahren nach Anspruch 2, wobei die Computereinrichtung ferner mit einer Ultraschalleinrichtung verbunden ist, das Material der Rigging-Modellentität Metallmaterial ist und das Verfahren ferner Folgendes umfasst:
wenn die Temperaturänderungsdaten einen vordefinierten Temperaturänderungsschwellenwert überschreiten, Steuern der Ultraschalleinrichtung, um eine Ultraschallfehlerdetektion an der Rigging-Modellentität durchzuführen, um ein Ultraschallfehlerdetektionsergebnis zu erhalten; und
Analysieren von Belastungsdaten der ersten Rigging-Modelldaten auf Grundlage des Ultraschallfehlerdetektionsergebnisses, der Temperaturänderungsdaten und der Verformungsdaten, die den vordefinierten Markierungspunkten entsprechen.

4. Verfahren nach Anspruch 2, weiter umfassend:
Erfassen einer festgelegten Rigging-Betriebsumgebungsdaten; und
Vorhersagen von Kühlmodi für die ersten Rigging-Modelldaten gemäß den festgelegten Rigging-Betriebsumgebungsdaten und den Temperaturänderungsdaten.

5. Verfahren nach Anspruch 4, wobei die Kühlmodi einen ersten Kühlmodus in einem ersten Prozess, in dem ein Rigging in den ersten Rigging-Modelldaten den Lastanwendungskörper antreibt, sich nach oben zu bewegen, und einen zweiten Kühlmodus in einem zweiten Prozess, in dem sich das Rigging und der Lastanwendungskörper nicht bewegen, umfassen;
das Vorhersagen der Kühlmodi für die ersten Rigging-Modelldaten gemäß den festgelegten Rigging-Betriebsumgebungsdaten und den Temperaturänderungsdaten umfasst:
Vorhersagen des ersten Kühlmodus für die ersten Rigging-Modelldaten in dem ersten Prozess gemäß den festgelegten Rigging-Betriebsumgebungsdaten, den Temperaturänderungsdaten, Gewichtsdaten des Lastanwendungskörpers und einer Bewegungsgeschwindigkeit des Rigging in dem ersten Prozess; und
Vorhersagen des zweiten Kühlmodus für die ersten Rigging-Modelldaten in dem zweiten Prozess gemäß den festgelegten Rigging-Betriebsumgebungsdaten, den Temperaturänderungsdaten und den Gewichtsdaten des Lastanwendungskörpers;
wobei ein Standardtemperaturschwellenwert in dem ersten Kühlmodus größer als ein Standardtemperaturschwellenwert in dem zweiten Kühlmodus ist.

6. Verfahren nach Anspruch 2, weiter umfassend:
Analysieren von Belastungsdaten der ersten Rigging-Modelldaten auf Grundlage der Temperaturänderungsdaten und der Verformungsdaten, die den vordefinierten Markierungspunkten entsprechen.

7. Verfahren nach Anspruch 3 oder 6, wobei das Einstellen der Anordnungsposition des hinzugefügten Lastanwendungskörpers auf Grundlage der Anordnungsgenauigkeit und Daten des Lastanwendungskörpers, um die eingestellten zweiten Rigging-Modelldaten zu erhalten, Folgendes umfasst:
Einstellen der Anordnungsposition des hinzugefügten Lastanwendungskörpers auf Grundlage der Anordnungsgenauigkeit, der Daten des Lastanwendungskörpers und der Belastungsdaten, um die eingestellten zweiten Rigging-Modelldaten zu erhalten.

8. Datenverarbeitungsvorrichtung (400) zur Hinzufügung eines Lastanwendungskörpers, wobei die Vorrichtung auf eine Computereinrichtung angewendet wird, die Computereinrichtung mit einer dreidimensionalen Laserabtasteinrichtung verbunden ist und die Vorrichtung umfasst:
ein Erfassungsmodul (401), das dazu konfiguriert ist, erste Rigging-Modelldaten zu erfassen, zu denen ein Lastanwendungskörper hinzugefügt wurde; wobei die ersten Rigging-Modelldaten Modelldaten sind, die durch Hinzufügen des Lastanwendungskörpers unter Verwendung einer dreidimensionalen Modellierungssoftware erzeugt werden;
ein Steuermodul (402), das konfiguriert ist, um eine dreidimensionale Laserabtasteinrichtung zu steuern, um auf vordefinierte Markierungspunkte zu zielen, die auf einer Oberfläche einer Rigging-Modellentität angeordnet sind, und um sich zusammen mit den vordefinierten Markierungspunkten zu bewegen; wobei die Rigging-Modellentität eine Modellentität ist, die den ersten Rigging-Modelldaten entspricht;
ein Bestimmungsmodul (403), das dazu konfiguriert ist, Bewegungsdaten der dreidimensionalen Laserabtasteinrichtung, die sich zusammen mit den vordefinierten Markierungspunkten bewegt, zu erfassen und gemäß den Bewegungsdaten Verformungsdaten zu bestimmen, die von der Rigging-Modellentität unter Belastung erzeugt werden;
ein Analysemodul (404), das konfiguriert ist, um gemäß den Verformungsdaten die Anordnungsgenauigkeit des Lastanwendungskörpers zu analysieren, der den ersten Rigging-Modelldaten hinzugefügt wurde; und
ein Einstellmodul (405), das dazu konfiguriert ist, eine Anordnungsposition des hinzugefügten Lastanwendungskörpers auf Grundlage der Anordnungsgenauigkeit und Daten des Lastanwendungskörpers einzustellen, um die eingestellten zweiten Rigging-Modelldaten zu erhalten.

9. Computerprogramm, das Anweisungen umfasst, um die Datenverarbeitungsvorrichtung nach Anspruch 8 zu veranlassen, die Schritte des Datenverarbeitungsverfahrens nach einem der Ansprüche 1 bis 7 auszuführen.

## Revendications

1. Procédé de traitement de données pour l'ajout d'un corps d'application de charge, dans lequel le procédé est appliqué à un dispositif informatique, le dispositif informatique est connecté à un dispositif de balayage par laser tridimensionnel, et le procédé comprend :
l'acquisition (S110) de premières données de modèle de gréage auxquelles un corps d'application de charge a été ajouté ;
dans lequel les premières données de modèle de gréage sont des données de modèle générées par l'ajout du corps d'application de charge à l'aide d'un logiciel de modélisation tridimensionnelle ;
la commande (S120) d'un dispositif de balayage par laser tridimensionnel afin qu'il vise des points de repère prédéfinis agencés sur une surface d'une entité de modèle de gréage, et qu'il se déplace le long des points de repère prédéfinis ; dans lequel l'entité de modèle de gréage est une entité de modèle correspondant aux premières données de modèle de gréage ;
l'acquisition (S130) de données de déplacement du dispositif de balayage par laser tridimensionnel se déplaçant le long des points de repère prédéfinis, et la détermination, selon les données de déplacement, de données de déformation générées par l'entité de modèle de gréage lorsqu'elle supporte une contrainte ;
l'analyse (S140), selon les données de déformation, d'une précision d'agencement du corps d'application de charge qui a été ajouté aux premières données de modèle de gréage ; et
l'ajustement (S150) d'une position d'agencement du corps d'application de charge ajouté, sur la base de la précision d'agencement et de données du corps d'application de charge, pour obtenir les secondes données de modèle de gréage ajustées.

2. Procédé selon la revendication 1, comprenant en outre :
tandis que des rayons laser émis par le dispositif de balayage par laser tridimensionnel visent les points de repère prédéfinis et se déplacent le long de ceux-ci, la commande du dispositif de balayage par laser tridimensionnel pour détecter la température de l'entité de modèle aux points de repère prédéfinis, pour obtenir des données de changement de température de l'entité de modèle de gréage.

3. Procédé selon la revendication 2, dans lequel le dispositif informatique est en outre connecté à un dispositif ultrasonore, un matériau de l'entité de modèle de gréage est un matériau métallique, et le procédé comprend en outre :
lorsque les données de changement de température dépassent un seuil de changement de température prédéfini, la commande du dispositif ultrasonore afin qu'il effectue une détection de défaut par ultrasons sur l'entité de modèle de gréage pour obtenir un résultat de détection de défaut par ultrasons ; et
l'analyse de données de contrainte des premières données de modèle de gréage sur la base du résultat de détection de défaut par ultrasons, des données de changement de température et des données de déformation correspondant aux points de repère prédéfinis.

4. Procédé selon la revendication 2, comprenant en outre :
l'acquisition de données d'environnement d'exploitation de gréage désignées ; et
la prédiction de modes de refroidissement pour les premières données de modèle de gréage selon les données d'environnement d'exploitation de gréage désignées et les données de changement de température.

5. Procédé selon la revendication 4, dans lequel les modes de refroidissement comprennent un premier mode de refroidissement dans un premier processus dans lequel un gréage dans les premières données de modèle de gréage entraîne le corps d'application de charge afin qu'il se déplace vers le haut, et un second mode de refroidissement dans un second processus dans lequel le gréage et le corps d'application de charge ne se déplacent pas ;
la prédiction des modes de refroidissement pour les premières données de modèle de gréage selon les données d'environnement d'exploitation de gréage désignées et les données de changement de température, comprend :
la prédiction du premier mode de refroidissement pour les premières données de modèle de gréage dans le premier processus selon les données d'environnement d'exploitation de gréage désignées, les données de changement de température, des données de poids du corps d'application de charge et une vitesse de déplacement du gréage dans le premier processus ; et
la prédiction du second mode de refroidissement pour les premières données de modèle de gréage dans le second processus selon les données d'environnement d'exploitation de gréage désignées, les données de changement de température et les données de poids du corps d'application de charge ;
dans lequel un seuil de température standard dans le premier mode de refroidissement est supérieur à un seuil de température standard dans le second mode de refroidissement.

6. Procédé selon la revendication 2, comprenant en outre :
l'analyse de données de contrainte des premières données de modèle de gréage sur la base des données de changement de température et des données de déformation correspondant aux points de repère prédéfinis.

7. Procédé selon la revendication 3 ou 6, dans lequel l'ajustement de la position d'agencement du corps d'application de charge ajouté, sur la base de la précision d'agencement et de données du corps d'application de charge, pour obtenir les secondes données de modèle de gréage ajustées comprend :
l'ajustement de la position d'agencement du corps d'application de charge ajouté, sur la base de la précision d'agencement, des données du corps d'application de charge et des données de contrainte, pour obtenir les secondes données de modèle de gréage ajustées.

8. Appareil de traitement de données (400) pour l'ajout d'un corps d'application de charge, dans lequel l'appareil est appliqué à un dispositif informatique, le dispositif informatique est connecté à un dispositif de balayage par laser tridimensionnel, et l'appareil comprend :
un module d'acquisition (401), configuré pour acquérir des premières données de modèle de gréage auxquelles un corps d'application de charge a été ajouté ; dans lequel les premières données de modèle de gréage sont des données de modèle générées par l'ajout du corps d'application de charge à l'aide d'un logiciel de modélisation tridimensionnelle ;
un module de commande (402), configuré pour commander un dispositif de balayage par laser tridimensionnel afin qu'il vise des points de repère prédéfinis agencés sur une surface d'une entité de modèle de gréage, et qu'il se déplace le long des points de repère prédéfinis ; dans lequel l'entité de modèle de gréage est une entité de modèle correspondant aux premières données de modèle de gréage ;
un module de détermination (403), configuré pour acquérir des données de déplacement du dispositif de balayage par laser tridimensionnel se déplaçant le long des points de repère prédéfinis, et déterminer, selon les données de déplacement, des données de déformation générées par l'entité de modèle de gréage lorsqu'elle supporte une contrainte ;
un module d'analyse (404), configuré pour analyser, selon les données de déformation, une précision d'agencement du corps d'application de charge qui a été ajouté aux premières données de modèle de gréage ; et
un module d'ajustement (405), configuré pour ajuster une position d'agencement du corps d'application de charge ajouté, sur la base de la précision d'agencement et de données du corps d'application de charge, pour obtenir les secondes données de modèle de gréage ajustées.

9. Programme informatique comprenant des instructions pour amener l'appareil de traitement de données selon la revendication 8 à exécuter les étapes du procédé de traitement de données selon l'une quelconque des revendications 1 à 7.
